# EUROPÄISCHE PATENTANMELDUNG

(11) **EP 4 671 737 A1**
(43) Veröffentlichungstag der Anmeldung: **31.12.2025**
(21) Anmeldenummer: 24185292.0
(22) Anmeldetag: 28.06.2024
(51) Int. Cl.: G01N 21/31, G01N 21/55, G01N 21/84, G01N 21/64, G06N 3/02, G06N 3/08, G06N 20/00

(54) **VERFAHREN ZUR BESTIMMUNG VON EIGENSCHAFTEN EINER HALBLEITERSCHICHTSTRUKTUR**

(71) Anmelder: Fraunhofer-Gesellschaft zur Förderung der angewandten Forschung e.V., 80686 München (DE)
(72) Erfinder: WÖRNHÖR, Alexandra, 79110 Freiburg (DE); VAHLMAN, Henri, 79110 Freiburg (DE); DEMANT, Matthias, 79110 Freiburg (DE); REIN, Stefan, 79110 Freiburg (DE); HAUNSCHILD, Jonas, 79110 Freiburg (DE); BURKHARDT, Daniel, 79110 Freiburg (DE)
(74) Vertreter: LBP Lemcke, Brommer & Partner Patentanwälte mbB

(57) **Zusammenfassung**

Verfahren zur Bestimmung mindestens einer Eigenschaft einer Halbleiterschichtstruktur, umfassend die Verfahrensschritte:
A - Bereitstellen des Halbleitersubstrates mit der Halbleiterschichtstruktu r;
B - Bereitstellen von Referenzdaten, welche für zumindest einen Referenzortspunkt einer Referenzschichtstruktur eine Mehrzahl wellenlängenabhängiger Referenzintensitäten einer von der Referenzschichtstruktur reflektierten und/oder emittierten Strahlung enthalten;
C - Bereitstellen von zumindest einer Referenzeigenschaft der Referenzschichtstruktur an dem Referenzortspunkt, wobei die Referenzeigenschaft mindestens eine Schichtdicke und/oder eine Porosität umfasst;
D - Messen der Halbleiterschichtstruktur an zumindest einem Messortspunkt und Erzeugen von Messdaten, welche für den Messortspunkt auf der Halbleiterschichtstruktur eine Mehrzahl wellenlängenabhängiger Messintensitäten einer von der Halbleiterschichtstruktur reflektierten und/oder emittierten Strahlung enthalten,
wobei die Anzahl der wellenlängenabhängigen Messintensitäten niedriger als ist die Anzahl der wellenlängenabhängigen Referenzintensitäten und/oder wobei die Messdaten spektral niedriger aufgelöst sind als die Referenzdaten;
E - Bestimmen der Eigenschaft der Halbleiterschichtstruktur an dem Messortspunkt in Abhängigkeit der Referenzintensitäten und der Referenzeigenschaft und der Messintensitäten, wobei die bestimmte Eigenschaft der Halbleiterschichtstruktur eine Schichtdicke und/oder eine Porosität umfasst.

## Beschreibung

Die Erfindung betrifft ein Verfahren zur Bestimmung von Eigenschaften einer Halbleiterschichtstruktur.

Bei Halbleiterschichtstrukturen handelt es sich um Halbleiterkomponenten mit einer Mehrzahl von Schichten, die in der Halbleitertechnologie verwendet werden, um elektronische Bauelemente herzustellen.

Hierbei stellen zum Beispiel Halbleiterwafer, insbesondere aus Silizium, kostenintensive Teile in der Herstellung von Photovoltaik-Komponenten dar und machen bis zu 60% des Preises einer Solarzelle aus. Aus diesem Grund ist es erwünscht, eine möglichst hohe Materialausbeute bei der Herstellung von Halbleiterwafern zu erzielen.

Die Herstellung von Halbleiterwafern beginnt üblicherweise mit der Reinigung und Kristallisation von Halbleitermaterial, um einen hochreinen Kristallblock zu erzeugen, der auch als Ingot bezeichnet wird. Dieser Kristallblock wird dann in Scheiben geschnitten und zu den oben genannten Halbleiterwafern verarbeitet. Der Schnitt des Kristallblocks kann mittels Sägen erfolgen, wodurch eine gute Maßhaltigkeit der Halbleiterwafer erreicht werden kann. Infolge des Spanabhubs geht allerdings wertvolles Halbleitermaterial verloren.

Das epitaktische Wachstum von Halbleiterwafern mittels Gasphasenabscheidung ermöglicht es im Vergleich dazu, Materialverluste bei der Herstellung von Halbleiterwafern zu verringern. Bei diesem Verfahren wird ein Trägergas, das die chemischen Vorläufer der zu erzeugenden Halbleiterschicht enthält, über das Substrat geleitet. Diese Vorläufer reagieren an der Oberfläche des Substrats, wobei durch geeignete Prozessführung eine homogene dünne Schicht erzeugt wird. Um den sog. Saatwafer wiederverwenden zu können, muss die aufgewachsene Schicht vom Saatwafer ablösbar sein. Hierzu wird der Saatwafer vor dem Epitaxie-Prozess derart präpariert, dass sich im Prozess eine Trennschicht ausbildet, die leicht vom Saatwafer getrennt werden kann. In einem ersten Schritt wird der Saatwafer hierfür zunächst porosifiziert, so dass ein Stapelsystem aus mehreren dünnen Schichten unterschiedlicher Porosität entsteht.

Bei einem Mehrschichtsystem kann die oberste dieser Schichten beispielsweise eine geringere Porosität als die darunterliegende Schicht aufweisen und wird daher als Schicht mit geringer Porosität (Englisch: Low Porosity Layer; LPL) bezeichnet, während die darunterliegende Schicht als Schicht mit hoher Porosität (Englisch: High Porosity Layer; HPL) bezeichnet wird.

Um Schichten unterschiedlicher Porosität zu erzeugen, wird häufig ein Ätzprozess verwendet. Abhängig von den Rezeptparametern, wie der Badzusammensetzung, der Ätzdauer und dem angelegten elektrischen Feld, kann der Ätzprozess geregelt werden, wodurch die unterschiedlichen porösen Eigenschaften der Schichten bedarfsgerecht eingestellt werden können. Dies wird oft als poröses Ätzen bezeichnet. Der Ätzprozess entfernt Material und erzeugt Poren oder Hohlräume in der Schicht, wodurch die Porosität erhöht wird.

Infolge eines sich anschließenden Sinterprozesses schließen sich die Poren auf der Oberfläche der LPL, so dass eine ebene Fläche für das epitaktische Wachstum von Halbleitermaterial, insbesondere Silizium, aus der Gasphase entsteht. Gleichzeitig werden durch den Sinterprozess auch die Poren der HPL-Schicht so weit vergrößert, dass die Porenwände praktisch verschwinden. Diese Art der Hohlraumbildung ermöglicht die spätere Trennung des epitaktisch hergestellten Halbleiterwafers von dem Substrat und die Wiederverwendung des Substrats für weitere Wachstumszyklen.

Die Eigenschaften der LPL und der HPL sind von tragender Bedeutung, um qualitativ hochwertige Halbleiterwafer zu erhalten, die sich leicht vom Substrat ablösen lassen. Für eine effiziente Produktion ist es deshalb erwünscht, eine Qualitätssicherung der Halbleiterschichtstruktur durchzuführen. Die Analyse optischer, spektrophotometrischer Daten stellt eine gängige Methode zur Gewinnung von Informationen über die Struktur und die Eigenschaften dünner Schichten dar. Die hierfür erforderlichen Messungen werden in der Regel mit hochpräzisen Spektrophotometern durchgeführt. Allerdings gehen derartige Messungen mit langen Messdauern einher, insbesondere wenn die Eigenschaften der Halbleiterschichtstruktur ortsaufgelöst und insbesondere über die gesamte Halbleiterschichtstruktur ermittelt werden sollen.

Zur Erreichung hinreichend hoher Produktionsstückzahlen ist gewünscht, eine Qualitätssicherung im Rahmen einer Inline-Produktionsüberwachung durchzuführen, bei der idealerweise alle hergestellten Schichtstrukturen einer Qualitätsprüfung unterzogen werden. Damit derartige Maßnahmen zur Inline- Produktionsüberwachung nicht zum Engpass in der Produktion werden, sollten die erforderlichen Mess- und Prüfdauern die Taktzeit der Produktion nicht überschreiten und dementsprechend schnell ablaufen.

Neben dem Erfordernis, den Herstellungsprozess von Halbleiterwafern und deren Schichtstrukturen überwachen zu können, besteht auch ein Bedarf danach, die Qualität bereits hergestellter Solarzellen mit zwei oder mehr Schichten überprüfen zu können. Dies betrifft insbesondere sogenannte Heterojunction (HJT)-Solarzellen, welche Schichten aus amorphem Silizium (a-Si) und transparentem leitfähigem Oxid (TCO) umfassen oder etwa Tunnel Oxide Passivated Contact (TOPCon) Solarzellen mit polykristallinem Silizium. Angesichts des hohen Marktwertes mehrschichtiger Solarzellen, besteht hohes wirtschaftliches Interesse daran, zuverlässig und schnell sicherstellen zu können, dass diese die gewünschten Eigenschaften aufweisen.

Der Erfindung liegt daher die Aufgabe zugrunde, ein Verfahren vorzuschlagen, mit dem mindestens eine Eigenschaft einer Halbleiterschichtstruktur ortsaufgelöst, schnell und mit hoher Genauigkeit ermittelt werden kann.

Die Aufgabe wird gelöst durch ein Verfahren gemäß Anspruch 1. Vorteilhafte Weiterbildungen sind jeweils Gegenstände der abhängigen Unteransprüche.

Das erfindungsgemäße Verfahren dient der Bestimmung mindestens einer Eigenschaft einer Halbleiterschichtstruktur und umfasst die folgenden Verfahrensschritte:
A - Bereitstellen der Halbleiterschichtstruktur;
B - Bereitstellen von Referenzdaten, welche für zumindest einen Referenzortspunkt einer Referenzschichtstruktur eine Mehrzahl wellenlängenabhängiger Referenzintensitäten einer von der Referenzschichtstruktur reflektierten und/oder emittierten Strahlung enthalten;
C - Bereitstellen von zumindest einer Referenzeigenschaft der Referenzschichtstruktur an dem Referenzortspunkt, wobei die Referenzeigenschaft eine Schichtdicke und/oder eine Porosität umfasst;
D - Messen der Halbleiterschichtstruktur an zumindest einem Messortspunkt und Erzeugen von Messdaten, welche für den Messortspunkt auf der Halbleiterschichtstruktur eine Mehrzahl wellenlängenabhängiger Messintensitäten einer von der Halbleiterschichtstruktur reflektierten und/oder emittierten Strahlung enthalten,
   wobei die Anzahl der wellenlängenabhängigen Messintensitäten niedriger als ist die Anzahl der wellenlängenabhängigen Referenzintensitäten und/oder wobei die Messdaten spektral niedriger aufgelöst sind als die Referenzdaten;
E - Bestimmen der Eigenschaft der Halbleiterschichtstruktur an dem Messortspunkt in Abhängigkeit der Referenzintensitäten und der Referenzeigenschaft und der Messintensitäten, wobei die bestimmte Eigenschaft der Halbleiterschichtstruktur eine Schichtdicke und/oder eine Porosität umfasst.

Eine erste Erkenntnis, auf der die Erfindung beruht, besteht darin, dass die optischen Eigenschaften einer Halbleiterschichtstruktur von den Schichteigenschaften der Halbleiterschichtstruktur abhängig sind. Durch Messung der reflektierten und/oder emittierten Strahlung ist es grundsätzlich also möglich, auf die Schichteigenschaft zu schließen.

Insbesondere handelt es sich bei der von der Halbleiterschichtstruktur emittierten und/oder reflektierten Strahlung um Lichtstrahlung, deren Intensität bestimmten Schichteigenschaften, also einer Porosität und/oder einer Schichtdicke zugeordnet werden kann. So kann die Halbleiterschichtstruktur beispielsweise zu Photolumineszens und/oder zu Elektrolumineszenz angeregt werden und die dabei emittierte Lichtstrahlung über ihren Spektralbereich unterschiedliche, wellenlängenabhängige Intensitäten aufweisen. Ebenso kann die Halbleiterschichtstruktur mit Lichtstrahlung beaufschlagt werden und diese derart reflektierten, dass die reflektierte Lichtstrahlung über ihren Spektralbereich unterschiedliche, wellenlängenabhängige Intensitäten aufweist.

Eine zweite Erkenntnis beruht darauf, dass die Messung der emittierten und/oder wellenlängenabhängigen Strahlung mit einer vergleichsweise geringen Anzahl an Messintensitäten und/oder mit einer geringen spektralen Auflösung der Messintensitäten erfolgen kann und es nichtsdestotrotz möglich ist, die zu bestimmende Eigenschaft der Halbleiterschichtstruktur mit hoher Genauigkeit zu ermitteln. Hierfür müssen jedoch die Referenzdaten mit einer höheren spektralen Auflösung und/oder mit einer höheren Anzahl an Referenzintensitäten bereitgestellt werden, die insbesondere den am Referenzortspunkt vorliegenden Referenzeigenschaften zugeordnet sind.

In einer einfachen Ausführungsform können beispielsweise die Messintensitäten und die Referenzintensitäten bei identischen Wellenlängen oder Wellenlängenbereichen miteinander abgeglichen werden, um bei hinreichender Ähnlichkeit zwischen den Messintensitäten und den Referenzintensitäten einen Rückschluss auf die zu bestimmende Eigenschaft zu machen. Die Referenzschichtstruktur kann daher als eine Halbleiterschichtstruktur angesehen werden, deren Eigenschaften als Referenzeigenschaften bezeichnet werden, welche mit den zu bestimmenden Schichteigenschaften der gemessenen Halbleiterschichtstruktur vergleichbar sind.

In einer möglichen Ausführungsform handelt es sich bei der Referenzschichtstruktur um einen Teilbereich der in Verfahrensschritt A bereitgestellten Halbleiterstruktur. Hierbei können die Referenzintensitäten vor oder während des Verfahrensschrittes B hochaufgelöst und zumindest an dem Referenzpunkt ermittelt werden. In einer anderen möglichen Ausführungsform handelt es sich bei der Referenzschichtstruktur um einen Teilbereich eines Probenkörpers, an dem die Referenzdaten erhoben werden. Insbesondere kann der Probenkörper aus demselben Produktionslos stammen, wie das Halbleitersubstrat aus Verfahrensschritt A. Es liegt jedoch auch im Rahmen der Erfindung, dass der Probenkörper aus einem vorhergehenden Produktionslos stammen kann. Im einfachsten Anwendungsfall können sowohl die Referenzdaten als auch die Referenzeigenschaften messtechnisch ermittelt werden.

Die geringe spektrale Auflösung der Messdaten ermöglicht es, die Messung in kurzer Zeit und grundsätzlich an einer Vielzahl von Messortspunkten durchzuführen, um die Schichteigenschaften der Halbleiterschichtstruktur, nämlich die Porosität und/oder die Schichtdicke vollflächig und ortsaufgelöst ermitteln zu können. Im Rahmen der Erfindung bedeutet der Begriff "ortsaufgelöst", dass die Eigenschaft der Halbleiterschichtstruktur einem wählbaren Messortspunkt auf der Oberfläche der Halbleiterschichtstruktur bestimmbar ist und diesem Messortspunkt insbesondere zugeordnet werden kann. Beispielsweise liegt die räumliche Auflösung eines Messsystems, mittels dessen die Messdaten erfassbar sind bei 1024x1024Pixeln oder 3000x3000Pixeln, bevorzugt bei einer Pixelgröße zwischen 20 µm/Pixel und 200 µm/Pixel.

Im Rahmen der Erfindung entsprechen die wellenlängenabhängigen Intensitäten allgemein einer Mehrzahl skalarer Intensitätswerte, denen jeweils eine Wellenlänge im Spektrum der emittierten Strahlung zugeordnet werden kann. Die spektrale Auflösung bezieht sich auf die kleinstmögliche, erfassbare Differenz zwischen den Wellenlängen der Intensitäten der emittierten und/oder reflektierten Strahlung. Eine hohe spektrale Auflösung bedeutet also, dass die kleinstmögliche Differenz zwischen zwei Wellenlängen, bei denen jeweils ein Intensitätswert messbar ist, gering ist. Eine niedrige spektrale Auflösung bedeutet hingegen, dass die kleinstmögliche Differenz zwischen zwei Wellenlängen, bei denen jeweils ein Intensitätswert messbar ist, hoch ist.

Die wellenlängenabhängigen Referenzintensitäten können insbesondere mit einer spektralen Auflösung von 2 nm vorliegen, insbesondere in einem Spektrum zwischen 300 nm und 1100 nm. Im Vergleich dazu können die wellenlängenabhängigen Intensitäten mit einer Auflösung von 50 nm vorliegen, insbesondere ebenfalls in einem Spektrum zwischen 300 nm und 1100 nm. Bevorzugt werden die wellenlängenabhängigen Referenzintensitäten und/oder die gemessenen wellenlängenabhängigen Intensitäten mittels Messung diskreter wellenlängenabhängiger Intensitätswerte ermittelt. Unter Berücksichtigung oben genannter spektraler Auflösungen können die Referenzdaten insgesamt bis zu 400 Referenzintensitäten enthalten. Die Messdaten können insgesamt nur drei, vier oder fünf Messintensitäten enthalten.

Es liegt im Rahmen der Erfindung, dass die Referenzdaten und die Messdaten sich nicht nur durch ihre spektrale Auflösung voneinander unterscheiden. Zusätzlich oder alternativ kann die Anzahl von wellenlängenabhängigen Messintensitäten in den Messdaten höher sein als die Anzahl an wellenlängenabhängigen Referenzintensitäten in den Referenzdaten.

In einer einfachen Ausführungsform können die Referenzdaten mittels eines Spektrometers zumindest an dem Referenzortspunkt ermittelt werden. Die Messdaten können hingegen bildgebend mittels eines multispektralen Messsystems und/oder eines hyperspektralen Messsystems zumindest an dem Messortspunkt erfasst werden.

Ein Unterschied zwischen einem multispektralen und einem hyperspektralen Messsystem kann darin gesehen werden, dass das multispektrale Messsystem dazu ausgebildet ist, eine vergleichsweise geringe Anzahl breiter Wellenlängenbänder zu erfassen, während das hyperspektrale Messsystem dazu ausgebildet ist, eine vergleichsweise große Anzahl schmaler Wellenlängenbänder zu erfassen.

Bei der multispektralen Messung kann die Halbleiterschichtstruktur beispielsweise gezielt mit Licht aus einer festgelegten Anzahl von Wellenlängenbereichen nacheinander beleuchtet werden, sodass das multispektrale Messsystem zur kamerabasierten Detektion von wellenlängenabhängigen Messintensitäten ausgebildet sein kann. Bei einer hyperspektralen Messung kann ein Bild aufgenommen werden, wobei reflektiertes Licht beispielsweise mit Filtern und/oder einem Prisma in Wellenlängenbereiche zerlegt wird. Sowohl bei der Messung mittels eines multispektralen Messsystems als auch mittels des hyperspektralen Messsystems kann eine homogene weiße Beleuchtung der Halbleiterschichtstruktur erfolgen, beispielsweise mittels einer Beleuchtungskuppel.

Die Halbleiterschichtstruktur kann zumindest teilweise monokristallines Silizium umfassen. Die Halbleiterschichtstruktur kann zumindest zwei Schichten umfassen, wobei eine erste Schicht eine niedrigere Porosität aufweist als eine zweite Schicht. Die bestimmte Schichteigenschaft kann eine Porosität und/oder Schichtdicke der ersten Schicht und/oder eine Porosität und/oder Schichtdicke der zweiten Schicht umfassen. Es ist auch denkbar, dass die Halbleiterschichtstruktur mehr als zwei Schichten aufweist, insbesondere drei Schichten, bevorzugt mehr als drei Schichten.

In einer vorteilhaften Weiterbildung der Erfindung werden vor Verfahrensschritt E die in Verfahrensschritt B bereitgestellten Referenzdaten in ein erstes Modell eingegeben und in Verfahrensschritt C die Referenzeigenschaft von dem ersten Modell ausgegeben. Alternativ wird vor Verfahrensschritt E die in Verfahrensschritt C bereitgestellte Referenzeigenschaft in ein erstes Modell eingegeben, woraufhin das erste Modell in Verfahrensschritt B die Referenzdaten ausgibt.

Gemäß der vorstehend beschriebenen Weiterbildung kann die Referenzschichtstruktur durch das erste Modell vorgegeben sein, mittels dessen ein allgemeiner Zusammenhang zwischen den Schichteigenschaften und den optischen Eigenschaften der Halbleiterschichtstruktur abbildbar ist. Es können insbesondere spektral hochaufgelöste Referenzintensitäten in das erste Modell eingegeben werden, welches in Abhängigkeit davon die dazu gehörigen Referenzeigenschaften ausgibt. Wie oben beschrieben, kann ein erstes Modell alternativ auch derart ausgestaltet sein, dass die Referenzeigenschaft in das erste Modell eingegeben wird und das erste Modell die dazu gehörigen Referenzdaten ausgibt.

Das erste Modell kann demnach zumindest auf zwei unterschiedliche Weisen ausgestaltet sein, welche sich durch die möglichen Ein- und Ausgaben des ersten Modells voneinander unterscheiden. Gemäß einer ersten Ausgestaltung kann zumindest eine Referenzintensität in das erste Modell eingegeben und von dem ersten Modell eine Referenzeigenschaft ausgegeben werden. Gemäß einer zweiten Ausgestaltung kann zumindest eine Referenzeigenschaft in das erste Modell eingegeben werden und von dem ersten Modell eine Referenzintensität ausgegeben werden.

Durch Verwendung des ersten Modells kann darauf verzichtet werden, sowohl die Referenzeigenschaften als auch die Referenzintensitäten messtechnisch zu erfassen. Stattdessen können nur die Referenzeigenschaften oder die Referenzintensitäten messtechnisch ermittelt werden und die jeweils andere Größe modellhaft mittels des ersten Modells bestimmt werden. Hierfür kann das erste Modell ein physikalisches Modell, insbesondere ein Simulationsmodell, und/oder ein analytisches Modell und/oder ein trainiertes Modell auf Basis einer künstlichen Intelligenz, insbesondere einem neuronalen Netz, umfassen.

In einer vorteilhaften Weiterbildung umfasst das Verfahren den folgenden Verfahrensschritt:
D0 - Messen der Referenzschichtstruktur an dem Referenzortspunkt und Erzeugen von Vergleichsdaten, welche für den Referenzortspunkt auf der Referenzschichtstruktur eine Mehrzahl wellenlängenabhängiger Vergleichsintensitäten einer von der Referenzschichtstruktur reflektierten und/oder emittierten Strahlung enthalten, wobei die Vergleichsintensitäten mit der gleichen Anzahl und/oder spektralen Auflösung vorliegen wie die Messintensitäten. Ein zweites Modell wird zumindest in Abhängigkeit der Vergleichsdaten und der Referenzeigenschaft an dem Referenzortspunkt definiert. In Verfahrensschritt E wird die Eigenschaft der Halbleiterschichtstruktur an dem Messortspunkt ermittelt, indem die Messdaten in das zweite Modell eingegeben werden, und das zweite Modell die Schichteigenschaft an dem Messortspunkt ausgibt. Insbesondere erfolgt Verfahrensschritt D0 vor oder während Verfahrensschritt E.

Die vorstehend beschriebene Weiterbildung beruht darauf, dass der Referenzortspunkt einerseits zum Erfassen spektral hoch aufgelöster Referenzintensitäten sowie andererseits zum Erfassen eines Vergleichsdatensatzes dient. Entscheidend ist, dass die Vergleichsintensitäten mit der gleichen Anzahl und/oder spektralen Auflösung vorliegen, wie die Messintensitäten. Dies hat zum Vorteil, dass das zweite Modell in Abhängigkeit von Daten definiert werden kann, die die gleiche Informationsdichte aufweisen, wie die Daten, die zur Bestimmung der Eigenschaft der Halbleiterschichtstruktur in das zweite Modell eingegeben werden. Dies ist insbesondere vorteilhaft, wenn das zweite Modell auf Basis einer künstlichen Intelligenz beruht und mittels der Vergleichsdaten und der Referenzeigenschaft an dem Referenzortspunkt trainiert wird. Dabei liegt die Eingabe in Verfahrensschritt E in Gestalt der Messintensitäten in dem gleichen Format vor, wie die Daten, mit denen das zweite Modell trainiert wurde.

Während das erste Modell einen Zusammenhang zwischen der Eigenschaft der Referenzschichtstruktur und Referenzintensitäten angibt, gibt das zweite Modell einen Zusammenhang zwischen der Eigenschaft der Referenzschichtstruktur und den Vergleichsintensitäten an. Bevorzugt umfasst das zweite Modell ein analytisches Modell und/oder ein Modell auf Basis einer künstlichen Intelligenz, insbesondere einem neuronalen Netz.

Es liegt im Rahmen der Erfindung, dass die Vergleichsdaten mit den gleichen Mitteln bereitgestellt werden, die auch für die Erfassung der Messintensitäten verwendet werden, insbesondere also mittels eines multispektralen Messsystems und/oder eine eines hyperspektralen Messsystems. Es liegt auch im Rahmen der vorteilhaften Weiterbildung, dass die Vergleichsdaten anhand der Referenzschichtstruktur mit den gleichen Mitteln bereitgestellt werden, die auch für die Bereitstellung der Referenzdaten verwendet werden. Insbesondere kann hierfür also ein Spektrometer verwendet werden, dessen spektrale Auflösung niedriger eingestellt wird und/oder nur ein Teil der gemessenen Intensitäten herangezogen wird, um die Vergleichsdaten zu bestimmen.

In einer vorteilhaften Weiterbildung werden die Referenzdaten und die Referenzeigenschaft an einer Mehrzahl zueinander benachbarter Referenzortspunkte bereitgestellt und die Vergleichsintensitäten an den Referenzortspunkten ermittelt. Das zweite Modell wird zumindest in Abhängigkeit der Vergleichsintensitäten und den Referenzeigenschaften an den Referenzortspunkten definiert, derart, dass das zweite Modell in Verfahrensschritt E eine Nachbarschaftsbeziehung zwischen Eigenschaften an zwei benachbarten Messortspunkten berücksichtigt. Vorzugsweise liegen die Referenzortspunkte der Mehrzahl an Referenzintensitäten, in deren Abhängigkeit das zweite Modell definiert wird, entlang einer Linie oder flächig vor.

Die vorstehend beschriebene Weiterbildung ermöglicht es, die Eigenschaft der Halbleiterschichtstruktur nicht allein in Abhängigkeit der Messintensitäten an einem Messortspunkt zu bestimmen. Vielmehr besteht eine Erkenntnis darin, dass die Eigenschaften der Halbleiterschichtstruktur sich zwischen mehreren Messortspunkten typischerweise kontinuierlich verändern, sodass die Berücksichtigung der Eigenschaft der Halbleiterschichtstruktur an einem benachbarten Messortspunkt dazu genutzt werden kann, die Bestimmung der Eigenschaft an dem Messortspunkt zu unterstützten. Bevorzugt kann die zu bestimmende Eigenschaft an einem Messortspunkt in Verfahrensschritt E also in Abhängigkeit der Eigenschaft an einem benachbarten Messortspunkt ermittelt werden. Hierfür kann die Eigenschaft an einem Messortspunkt beispielsweise zunächst initial bestimmt werden und in Abhängigkeit der Eigenschaft an einem benachbarten Messortpunkt korrigiert werden. Ebenso kann die Eigenschaft an dem benachbarten Messortspunkt dazu genutzt werden, die Plausibilität der ermittelten Eigenschaft an dem Messortspunkt zu verifizieren oder die ermittelte Eigenschaft mit einem Zuverlässigkeitskennwert zu versehen. Ein weiterer Vorteil besteht darin, dass die Ermittlung von Eigenschaften an benachbarten Messortspunkten zu kontinuierlichen Ergebnissen führt, die insbesondere bei bildgebender Messung der Halbleiterschichtstruktur einfacher zu interpretieren sind.

In dem Fall, dass das zweite Modell ein analytisches Modell umfasst, kann die Nachbarschaftsbeziehung in Abhängigkeit eines Kennwertes angegeben sein, welcher zum Beispiel eine Intensitätsdifferenz zwischen zwei Messintensitäten an zwei benachbarten Messortspunkten wiedergibt und vorzugsweise einen vordefinierten Schwellenwert nicht über- oder unterschreiten darf. In dem Fall, dass das zweite Modell auf Basis einer künstlichen Intelligenz beruht, kann das zweite Modell die Nachbarschaftsbeziehung unmittelbar für die Ermittlung der Eigenschaft der Halbleiterschichtstruktur berücksichtigen.

Vorzugsweise wird die in Verfahrensschritt E bestimmte Eigenschaft der Halbleiterschichtstruktur an dem Messortspunkt in das zweite Modell zurückgeführt und Verfahrensschritt E an einem weiteren Messortspunkt wiederholt, wobei die Schichteigenschaft an dem weiteren Messortspunkt in Abhängigkeit einer Nachbarschaftsbeziehung zu der Schichteigenschaft an dem Messortspunkt von dem zweiten Modell ausgegeben wird.

Es ist vorteilhaft, dass eine bereits ermittelte Eigenschaft der Halbleiterschichtstruktur an einem Messortspunkt in das zweite Modell zurückgeführt wird, um bei der Ermittlung der Eigenschaft der Halbleiterschichtstruktur an einem weiteren Messortspunkt berücksichtigt werden zu können. Sofern Verfahrensschritt E mittels einer Recheneinheit durchgeführt wird, kann dies die erforderliche Rechenleistung verringern, da die Eigenschaft der Halbleiterschichtstruktur an dem weiteren Messortspunkt nicht explizit, sondern unter Zuhilfenahme der bereits ermittelten Eigenschaft und einer Nachbarschaftsbeziehung bestimmt werden kann.

In einer vorteilhaften Weiterbildung werden die in Verfahrensschritt C bereitgestellten Referenzeigenschaften an einer Mehrzahl an Referenzortspunkten synthetisch erzeugt und in das erste Modell eingegeben. Das erste Modell gibt in Verfahrensschritt B die Referenzdaten, insbesondere mit spektral hochaufgelösten Referenzintensitäten, und in Verfahrensschritt D0 die Vergleichsdaten, insbesondere mit spektral niedrig aufgelösten Vergleichsintensitäten, aus.

Bei dem ersten Modell kann es sich, wie oben bereits geschildert, grundsätzlich um ein Modell handeln, das einen Zusammenhang zwischen der Schichteigenschaft einer Halbleiterschichtstruktur an einem Referenzortspunkt und den optischen Eigenschaften der Halbleiterschichtstruktur angibt. Durch Bereitstellung einer synthetisch erzeugten Referenzschichtstruktur kann das erste Modell dazu dienen, eine große Menge an Daten zu generieren, die insbesondere für die Definition, bevorzugt das Training des zweiten Modells, verwendet werden können. Die synthetisch erzeugte Referenzschichtstruktur kann als Satz synthetisch erzeugter Daten angesehen werden, die die Referenzschichteigenschaften wiedergeben. Insbesondere enthalten die synthetisch erzeugten Daten zumindest multispektrale Messdaten und/oder Reflexionsspektren und/oder Dicken und/oder Porositätseigenschaften.

In einer vorteilhaften Weiterbildung wird das zweite Modell in Abhängigkeit der Referenzeigenschaften, der Referenzdaten und den Vergleichsdaten definiert. In Verfahrensschritt E erfolgt das Bestimmen der Eigenschaft der Halbleiterschichtstruktur an einer Vielzahl an Messortspunkten ortsaufgelöst, indem die Messdaten in das zweite Modell eingegeben werden und das zweite Modell die Schichteigenschaft ortsaufgelöst für die Messortspunkte ausgibt.

Vorzugsweise können die Referenzeigenschaften entlang einer eindimensional verlaufenden Spur und/oder einem zweidimensionalen Bereich auf der Referenzschichtstruktur vorliegen und eine beliebig einstellbare räumliche Verteilung aufweisen. Durch die Bereitstellung einer großen Menge an hochaufgelösten Referenzdaten und niedrig aufgelösten Vergleichsdaten kann das zweite Modell definiert, insbesondere trainiert werden, um in Verfahrensschritt D die Schichteigenschaft für jeden beliebigen Messortspunkt ausgeben zu können.

In einer anderen Verfahrensvariante werden die in Verfahrensschritt B bereitgestellten Referenzdaten mit spektral hochaufgelösten Referenzintensitäten und die in Verfahrensschritt D0 bereitgestellten Vergleichsdaten mit spektral niedrig aufgelösten Vergleichsintensitäten synthetisch erzeugt und in ein erstes Modell eingegeben, welches in Verfahrensschritt C die Referenzeigenschaften an den Referenzortspunkten ausgibt. Das zweite Modell wird, wie bereits beschrieben, in Abhängigkeit der Referenzeigenschaften, der Referenzdaten und den Vergleichsdaten definiert. In Verfahrensschritt E wird die Eigenschaft der Halbleiterschichtstruktur an einer Vielzahl an Messortspunkten ortsaufgelöst bestimmt, indem die Messdaten in das zweite Modell eingegeben werden und das zweite Modell die Schichteigenschaft ortsaufgelöst für die Messortspunkte ausgibt.

Die vorstehend beschriebene Verfahrensvariante unterscheidet sich dadurch von der vorhergehend beschriebenen Weiterbildung, dass die Referenzdaten und die Vergleichsdaten synthetisch erzeugt sind. Insbesondere können die Referenzdaten und/oder die Vergleichsdaten in Gestalt eines zweidimensionalen Bildes vorliegen, welches die wellenlängenabhängigen Intensitätsverteilungen, die den hochaufgelösten Referenzdaten und/oder den niedrigaufgelösten Vergleichsdaten zugrunde liegen, wiedergibt. Mittels des ersten Modells lassen sich die Referenzeigenschaften entsprechend synthetisch ermitteln und für die Definition des zweiten Modells verwendet werden.

Vorteile und Weiterbildungen der Erfindung werden nachfolgend anhand von Ausführungsbeispielen und den Figuren erläutert.

Es zeigen
- Figur 1: eine Halbleiterschichtstruktur in Seitenansicht a) und Draufsicht b);
- Figur 2: Verfahrensschritte eines ersten Verfahrens zur Bestimmung einer Eigenschaft der Halbleiterschichtstruktur;
- Figur 3: Verfahrensschritte eines zweiten Verfahrens zur Bestimmung einer Eigenschaft der Halbleiterschichtstruktur;
- Figur 4: Verfahrensschritte eines dritten Verfahrens zur Bestimmung einer Eigenschaft der Halbleiterschichtstruktur;
- Figur 5: Verfahrensschritte eines vierten Verfahrens zur Bestimmung einer Eigenschaft der Halbleiterschichtstruktur.

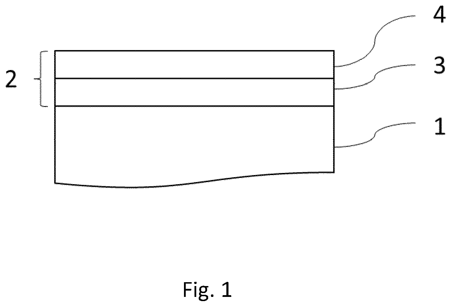

Figur 1 zeigt ein Halbleitersubstrat 1, bei dem es sich um einen kristallinen Siliziumblock handelt, auf dem eine Halbleiterschichtstruktur 2 angeordnet ist, die mittels eines elektro-chemischen Ätzprozesses erzeugt wurde. Die Halbleiterschichtstruktur 2 umfasst eine erste Schicht 3 und eine zweite Schicht 4. Die erste Schicht 3 weist im Vergleich zu der zweiten Schicht 4 eine höhere Porosität auf und dient als Trennschicht, damit die zweite Schicht 4 von dem Halbleitersubstrat 1 abgelöst werden kann. Typischerweise wird die erste Schicht 3 als High Porosity Layer (auch: HPL) bezeichnet und die zweite Schicht 4 als Low Porosity Layer (LPL).

Damit die obere Schicht 4 als Halbleiterwafer von dem Halbleitersubstrat 1 getrennt und zur Herstellung eines Halbleiterbauteils, etwa einer Solarzelle, verwendet werden kann, ist es erforderlich, dass sowohl die obere Schicht 4 als auch die untere Schicht 3 hinsichtlich ihrer Porositäten und Dicken die gewünschte Qualität aufweisen und diese ortsaufgelöst, in kurzer Zeit sowie mit hoher Genauigkeit bestimmt werden kann.

Die nachfolgend erläuterten Ausführungsvarianten eines Verfahrens beruhen auf der Erkenntnis, dass die optischen Eigenschaften der Halbleiterschichtstruktur von den Eigenschaften der Schichten 3 und 4 abhängig sind. Insbesondere ist es möglich, die Halbleiterschichtstruktur zur Emission und/der Reflexion von Lichtstrahlung anzuregen und durch Messung und Auswertung des Spektrums dieser Lichtstrahlung auf die Eigenschaft der Halbleiterschichtstruktur zu schließen. Üblicherweise geht die Messung und Auswertung spektraler Daten mit langen Messdauern einher und ist für Inline-Prozessüberwachungen untauglich. Mittels der hier beschriebenen Verfahrensvarianten ist es jedoch möglich, die erforderlichen Messdauern zu verkürzen und eine hohe Genauigkeit für eine ortsaufgelöste Messung zu erreichen.

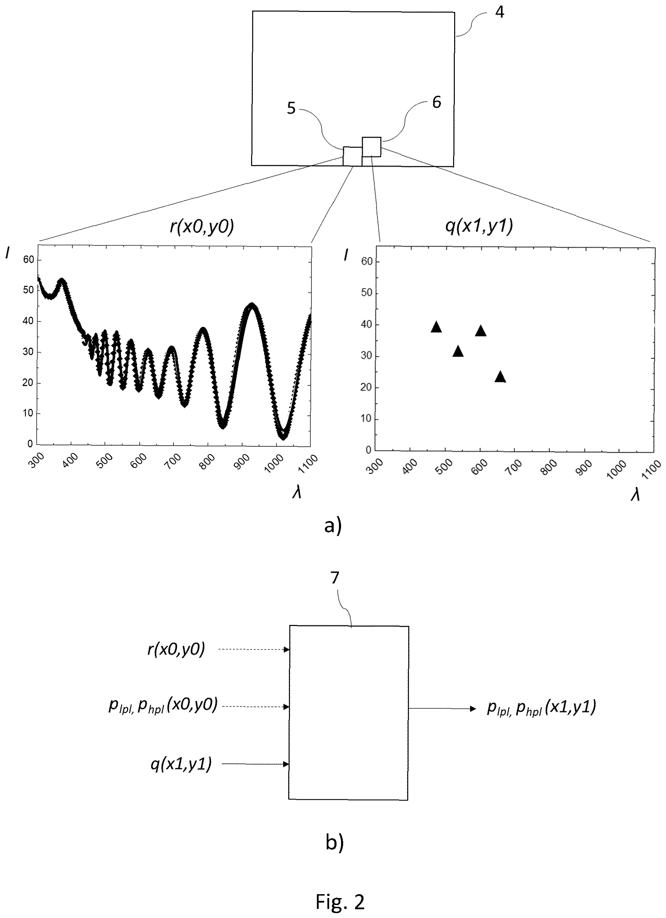

Eine erste Ausführungsvariante des Verfahrens ist in den Ansichten a) und b) der Figur 2 veranschaulicht.

Ansicht a) der Figur 2 zeigt die in Figur 1 gezeigte Struktur in Draufsicht, wobei die obere Schicht 4 die darunter liegende Schicht 3 und das Halbleitersubstrat 1 verdeckt. Die Halbleiterschichtstruktur ist in mehrere Punkte unterteilt, die zur leichteren Nachvollziehbarkeit quadratisch dargestellt sind und einen Referenzortspunkt 5 sowie ein Messortspunkt 6 umfassen. Für eine bessere Allgemeingültigkeit seien die Koordinaten des Referenzortspunktes 5 als x0, y0 bezeichnet und die Koordinaten des Messortspunktes 6 als x1, y1. Ein Aspekt bei der Durchführung der hier beschriebenen Verfahrensvarianten besteht darin, dass der Referenzortspunkt 5 als Ausgangspunkt dient, um die Schichteigenschaften an Messortspunkt 6 ortsaufgelöst und in kurzer Zeit bestimmen zu können.

Hierfür werden zunächst Referenzdaten an dem Referenzortspunkt *r(x0, y0)* mittels eines Spektrometers ermittelt, die, wie in Ansicht a) gezeigt, eine Mehrzahl von wellenlängenabhängigen Referenzintensitäten umfassen. Die Referenzdaten *r(x0, y0)* weisen über einen Wellenlängenbereich zwischen 300 nm und 1100 nm eine Anzahl von 400 diskret verteilten Referenzintensitäten auf.

Zudem wird die Halbleiterschichtstruktur an dem Messortspunkt 6 gemessen und dabei Messdaten *q(x1, y1)* ermittelt, die für den Messortspunkt 6 eine Mehrzahl wellenlängenabhängiger Messintensitäten enthalten. Die Messdaten *q(x1, y1)* weisen gegenüber den Referenzdaten eine deutlich niedrigere spektrale Auflösung auf, wobei in dem hier gezeigten Ausführungsbeispiel über einen Wellenlängenbereich zwischen 300 nm und 1100 nm eine Anzahl von 4 diskret verteilten Referenzintensitäten vorliegen.

Darüber hinaus werden Referenzeigenschaften an dem Referenzortspunkt *pₗₚₗ, pₕₚₗ (x0, y0)* bereitgestellt, die die Schichtdicken und Porositäten der Schichten 3 und 4 enthalten. Die Referenzeigenschaften *pₗₚₗ, pₕₚₗ (x0,y0)* können mittels eines weiteren Referenzmessgerätes ermittelt oder aus einer Schätzung oder einem Berechnungsmodell stammen.

Wie anhand von Ansicht b) der Figur 2 durch gestrichelte Pfeile veranschaulicht ist, werden die Referenzdaten *r(x0, y0)* sowie die Referenzeigenschaften *pₗₚₗ, pₕₚₗ (x0,y0)* zur Definition eines Modells 7 verwendet, welches einen Zusammenhang zwischen wellenlängenabhängigen Intensitäten und den Porositäten sowie den Dicken der Halbleiterschichtstruktur 2 angibt.

Durch Eingabe (durchgezogener Pfeil) der Messdaten an dem Messortspunkt *q(x0, y0)* wird mittels des Modells 7 ein Abgleich mit den Referenzdaten *r(x0, y0)* durchgeführt und die Schichteigenschaft an dem Messortspunkt *pₗₚₗ, pₕₚₗ (x1, y1)* ausgegeben. Bei dem Modell 7 handelt es sich um eine Abbildungsvorschrift, der den wellenlängenabhängigen Verlauf der Referenzintensitäten approximiert, sodass es auf einfache Weise möglich ist, die Messdaten *q(x1, y1)* mit r(x0,y0) abzugleichen und zu überprüfen, ob die Messintensitäten und die Referenzintensitäten hinreichend ähnlich oder identisch sind. Daraus kann, je nach Art des Modells 7, darauf geschlossen werden, ob an dem Messortspunkt 6 die gleichen Schichteigenschaften vorliegen wie an dem Referenzortspunkt 5 oder inwieweit sie sich unterscheiden.

Ein Vorteil der hier gezeigten Vorgehensweise besteht darin, dass die Messdaten *q(x1, y1)* an dem ersten Messortspunkt eine vergleichsweise geringe Datendichte aufweisen und schnell erhoben werden können. Dies begünstigt die Durchführung des Verfahrens im Rahmen einer Inline-Qualitätsüberprüfung. Insbesondere wird der Vorteil auch erreicht, wenn die Referenzdaten *r(x0, y0)* mit einem Spektrometer erhoben werden und eine vergleichsweise hohe Datendichte aufweisen. Wie weiter unten ebenfalls noch ausgeführt ist, besteht sogar die Möglichkeit gänzlich auf eine messtechnische Erfassung der Referenzdaten zu verzichten und diese synthetisch zu erzeugen, wodurch die erforderlichen Messdauern für tatsächlich durchzuführende Messungen an der Halbleiterschichtstruktur nochmals reduziert werden.

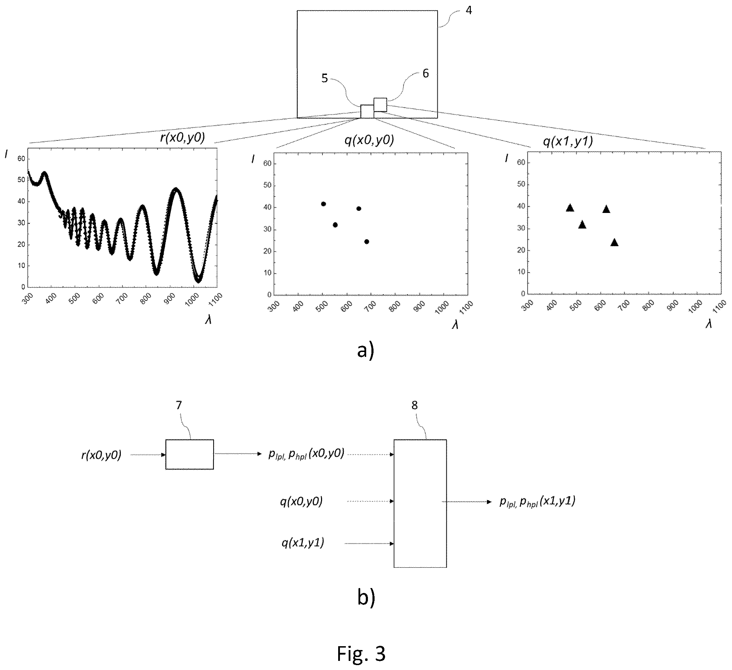

Eine zweite Ausführungsvariante eines Verfahrens zur Bestimmung der Schichteigenschaft ist in den Ansichten a) und b) der Figur 3 veranschaulicht.

Entsprechend den Ausführungen zu Ansicht a) der Figur 2 zeigt Ansicht a) der Figur 3 eine Halbleiterschichtstruktur in Draufsicht. Ebenso wie in Zusammenhang mit Ansicht a) der Figur 2 bereits ausgeführt, werden Referenzdaten *r(x0, y0)* sowie Messdaten *q(x1, y1)* bereitgestellt. Zusätzlich werden Vergleichsdaten *q(x0, y0)* an dem Referenzortspunkt bereitgestellt. Diese enthalten eine Mehrzahl an wellenlängenabhängigen Vergleichsintensitäten, die die gleiche spektrale Auflösung haben wie die Messdaten *q(x1, y1)* an dem Messortspunkt. Insbesondere können die Vergleichsdaten *q(x0, y0)* mit den gleichen Mitteln erhoben werden, die auch für die Ermittlung der Messdaten *q(x1, y1)* verwendet werden, beispielsweise also einem multispektralen Messsystem.

Im Unterschied zu dem Verfahren, das in Zusammenhang mit Figur 2 erläutert wurde, kommen bei dem in Figur 3 gezeigten Verfahren zwei voneinander getrennte Modelle 7, 8 zum Einsatz, mit denen die Schichteigenschaften an dem Messortspunkt *pₗₚₗ, pₕₚₗ (x1, y1)* bestimmt werden.

Hierfür werden die Referenzdaten *r(x0, y0)* an dem Referenzortspunkt in ein erstes Modell 7 eingegeben, bei dem es sich um ein physikalisches Modell handelt, das einen allgemeinen Zusammenhang zwischen spektral hochaufgelösten Intensitäten und den Schichteigenschaften angibt. Als Ausgabe hat das erste Modell 7 die Referenzeigenschaften an dem Referenzortspunkt *pₗₚₗ, pₕₚₗ (x0, y0).*

Die Referenzeigenschaften an dem Referenzortspunkt *pₗₚₗ, pₕₚₗ (x0, y0)* und die Vergleichsdaten an dem Referenzortspunkt *q(x0, y0)* werden zum Training eines zweiten Modells verwendet (gestrichelte Pfeile), welches einen allgemeinen Zusammenhang zwischen spektral niedrigaufgelösten Intensitäten und den Schichteigenschaften angibt. Die Messdaten *q(x1, y1)* an dem Messortspunkt werden in das zweite Modell 8 eingegeben, woraufhin dieses die Schichteigenschaften an dem Messortspunkt *pₗₚₗ, pₕₚₗ (x1,y1)* ausgibt.

Der Vorteil des in Figur 3 gezeigten Verfahrens besteht darin, dass das zweite Modell mit Vergleichsdaten trainiert wird, die die gleiche spektrale Auflösung aufweisen, wie die Messdaten an dem Messortspunkt, anhand derer die Eigenschaften der Halbleiterschichtstruktur an dem Messortpunkt bestimmt werden sollen. Dies erhöht die Qualität des zweiten Modells und ermöglicht eine genauere Bestimmung der Eigenschaften der Halbleiterschichtstruktur an dem Messortspunkt 6.

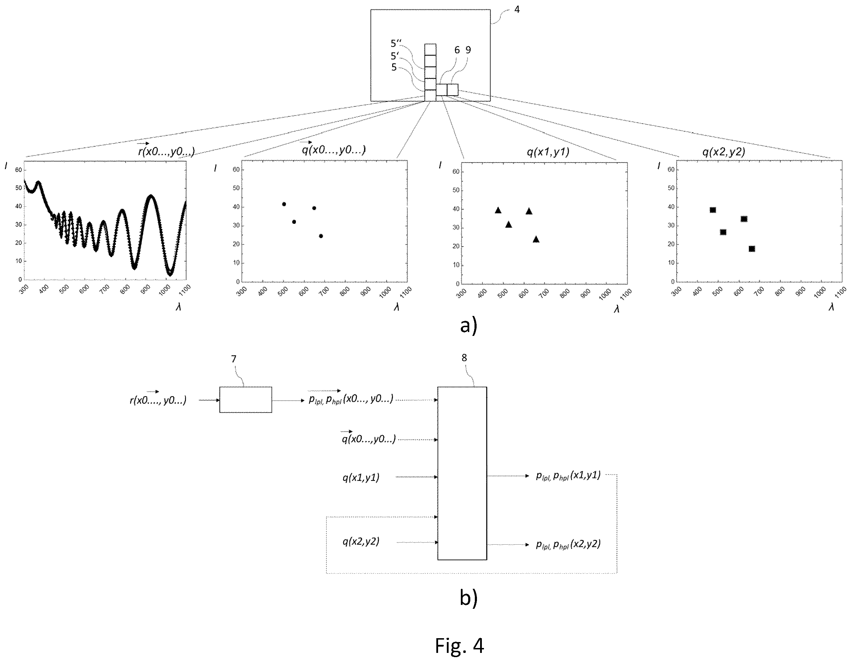

Eine dritte Ausführungsvariante eines Verfahrens zur Bestimmung der Schichteigenschaft ist in den Ansichten a) und b) der Figur 4 veranschaulicht.

Entsprechend den Ausführungen zu Ansicht a) der Figur 3 zeigt Ansicht a) der Figur 4 eine Halbleiterschichtstruktur in Draufsicht. Im Unterschied zu den bisherigen Erläuterungen werden Referenzdaten an einer Mehrzahl an Referenzortspunkten *̅r̅*̅(x0..., y0...) bereitgestellt, wobei die dazu gehörigen Referenzortspunkte 5, 5', 5"... entlang einer zusammenhängenden Spur auf der Halbleiterschichtstruktur angeordnet sind. Die Vergleichsdaten *̅q̅*̅(x0..., y0...) werden ebenfalls für eine Mehrzahl an Referenzortspunkten bereitgestellt.

Zusätzlich werden Messdaten an einem ersten und an einem zweiten Messortspunkt *q(x1, y1)* bzw. q(x2, y2) erhoben. Der zweite Messortspunkt 9 hat die Koordinaten x2, y2 und ist zu dem ersten Messortspunkt 6 benachbart. Die Messdaten an dem zweiten Messortspunkt *q(x2, y2)* weisen die gleiche spektrale Auflösung auf, wie die Messdaten an dem ersten Messortspunkt *q(x1, y1).*

Ähnlich wie in Zusammenhang mit Ansicht a) der Figur 3 bereits ausgeführt, werden die Referenzdaten *̅r̅*̅(*x0..., y0...)* in das erste Modell 7 eingegeben, woraufhin dieses die Schichteigenschaften *p̅ₗ̅ₚ̅ₗ̅,̅p̅ₕ̅ₚ̅ₗ̅(x0..., y0...)* für die Mehrzahl der Referenzortspunkte 5, 5', 5"... ausgibt. Die Schichteigenschaften *p̅ₗ̅ₚ̅ₗ̅,̅p̅ₕ̅ₚ̅ₗ̅ (x0..., y0...)* und die Vergleichsdaten *q̅(x0..., y0...)* werden dazu genutzt, um das zweite Modell 8 zu trainieren. Hierbei ist es vorteilhaft, dass die Referenzortspunkte zueinander benachbart vorliegen, da das zweite Modell 8 auf diese Weise zusätzlich unter Berücksichtigung von Nachbarschaftsverhältnissen der Schichteigenschaften an benachbarten Punkten trainiert wird (gestrichelte Pfeile).

Durch Eingabe der Messdaten an dem ersten Messortspunkt *q(x1,y1)* kann das das zweite Modell 8 damit zum Einen die Schichteigenschaften an dem ersten Messortspunkt *pₗₚₗ, pₕₚₗ (x1,y1)* ausgeben. Zusätzlich werden die Schichteigenschaften an dem ersten Messortspunkt *pₗₚₗ, pₕₚₗ (x1,y1)* zurückgeführt (gestrichelter Pfeil). Dadurch kann das zweite Modell die Schichteigenschaften *pₗₚₗ,pₕₚₗ (x1, y1)* an dem ersten Messortspunkt berücksichtigen, wenn Messdaten an einem zweiten Messortspunkt *q (x2, y2)* eingegeben werden und die Schichteigenschaften an diesem zweiten Messortspunkt *pₗₚₗ, pₕₚₗ (x2,y2)* unter Berücksichtigung der Nachbarschaftsbeziehungen zu den Schichteigenschaften an dem ersten Messortspunkt *pₗₚₗ, pₕₚₗ (x1,y1)* ausgeben.

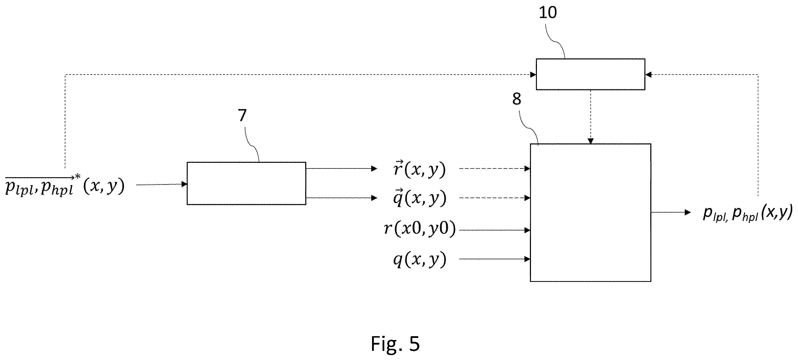

Eine vierte Ausführungsvariante eines Verfahrens zur Bestimmung der Schichteigenschaft ist in Figur 5 veranschaulicht.

Bei dem in Figur 5 gezeigten Verfahren dient eine synthetisch generierte Verteilung von Schichteigenschaften *p̅ₗ̅ₚ̅ₗ̅,̅p̅ₕ̅ₚ̅ₗ̅**(*x,y*) als Eingabe für das erste Modell 7, welches in diesem Ausführungsbeispiel ein physikalisches Modell ist, das allgemein einen Zusammenhang zwischen Schichteigenschaften und wellenlängenabhängigen Intensitäten angibt. Es ist relevant, dass die synthetisch erzeugte Verteilung der Schichteigenschaften flächig vorliegt, sodass die Schichteigenschaften für eine beliebige Koordinate verfügbar sind. Die synthetisch erzeugte Verteilung kann auf grundsätzlich beliebige Weise erzeugt sein, beispielsweise unter Berücksichtigung vorausgegangener Untersuchungen an hergestellten Schichtstrukturen oder durch eine Schätzung.

Die Ausgabe des ersten Modells 7 hat zum einen spektral hochaufgelöste Referenzdaten *r̅(x,y)* und zum anderen spektral niedrig aufgelöste Messdaten *q̅(x,y)* die jeweils ebenfalls ortsaufgelöst vorliegen. Die Referenzdaten und die Messdaten *r̅(x,y)* bzw. *q̅(x,y)* dienen zur Definition des zweiten Modells 8 unter Durchführung einer Konsistenzprüfung 10, einen Zusammenhang zwischen den Referenzdaten und Messdaten *r̅(x,y)* bzw. *q̅ (x,y)* und zu ermittelnden Schichteigenschaften *p̅ₗ̅ₚ̅ₗ̅,̅p̅ₕ̅ₚ̅ₗ̅ (x,y)* angeben soll. Mit Abschluss des überwachten Lernprozesses, werden Referenzdaten an einem Referenzortspunkt *r(x0,y0)* sowie vollflächig vorliegende Messdaten *q(x,y)* in das zweite Modell 8 eingegeben und die Schichteigenschaften ortsaufgelöst für jeden beliebigen Punkt auf der Halbleiterschichtstruktur *p̅ₗ̅ₚ̅ₗ̅,̅p̅ₕ̅ₚ̅ₗ̅ (x,y)* ausgegeben.

Alternativ können die Referenzdaten und die Messdaten *r̅(x,y)* bzw. *q̅(x,y)* nicht von dem ersten Modell 7 ausgegeben werden, sondern messtechnisch erfasst und/oder synthetisch erzeugt sein. Diese können einerseits in das erste Modell 7 eingegeben werden, um Schichteigenschaften *p̅ₗ̅ₚ̅ₗ̅,̅p̅ₕ̅ₚ̅ₗ̅ **(*x,y*) zu bestimmen sowie andererseits zur Definition des zweiten Modells 8 verwendet werden. Darüber hinaus gelten die Ausführungen zu der in Figur 5 gezeigten Ausführungsvariante entsprechend.

## Patentansprüche

1. Verfahren zur Bestimmung mindestens einer Eigenschaft einer Halbleiterschichtstruktur, umfassend die Verfahrensschritte:
A - Bereitstellen des Halbleitersubstrates mit der Halbleiterschichtstruktur;
B - Bereitstellen von Referenzdaten, welche für zumindest einen Referenzortspunkt einer Referenzschichtstruktur eine Mehrzahl wellenlängenabhängiger Referenzintensitäten einer von der Referenzschichtstruktur reflektierten und/oder emittierten Strahlung enthalten;
C - Bereitstellen von zumindest einer Referenzeigenschaft der Referenzschichtstruktur an dem Referenzortspunkt, wobei die Referenzeigenschaft mindestens eine Schichtdicke und/oder eine Porosität umfasst;
D - Messen der Halbleiterschichtstruktur an zumindest einem Messortspunkt und Erzeugen von Messdaten, welche für den Messortspunkt auf der Halbleiterschichtstruktur eine Mehrzahl wellenlängenabhängiger Messintensitäten einer von der Halbleiterschichtstruktur reflektierten und/oder emittierten Strahlung enthalten,
wobei die Anzahl der wellenlängenabhängigen Messintensitäten niedriger als ist die Anzahl der wellenlängenabhängigen Referenzintensitäten und/oder wobei die Messdaten spektral niedriger aufgelöst sind als die Referenzdaten;
E - Bestimmen der Eigenschaft der Halbleiterschichtstruktur an dem Messortspunkt in Abhängigkeit der Referenzintensitäten und der Referenzeigenschaft und der Messintensitäten, wobei die bestimmte Eigenschaft der Halbleiterschichtstruktur eine Schichtdicke und/oder eine Porosität umfasst.

2. Verfahren nach Anspruch 1, bei dem
die in Verfahrensschritt B bereitgestellten Referenzdaten in ein erstes Modell eingegeben werden und das erste Modell in Verfahrensschritt C die Referenzeigenschaft ausgibt
oder
die in Verfahrensschritt C bereitgestellte Referenzeigenschaft in ein erstes Modell eingegeben wird und das erste Modell in Verfahrensschritt B die Referenzdaten ausgibt.

3. Verfahren nach Anspruch 1, bei dem
das erste Modell ein physikalisches Modell, insbesondere ein Simulationsmodell, und/oder ein analytisches Modell und/oder ein Modell auf Basis einer künstlichen Intelligenz, insbesondere einem neuronalen Netz, umfasst.

4. Verfahren nach Anspruch 2 oder 3, mit einem Verfahrensschritt
D0 - Messen der Referenzschichtstruktur an dem Referenzortspunkt und Erzeugen von Vergleichsdaten, welche für den Referenzortspunkt auf der Referenzschichtstruktur eine Mehrzahl wellenlängenabhängiger Vergleichsintensitäten einer von der Referenzschichtstruktur reflektierten und/oder emittierten Strahlung enthalten,
wobei die Vergleichsintensitäten der Vergleichsdaten mit der gleichen Anzahl und/oder spektralen Auflösung vorliegen wie die Messintensitäten,
und ein zweites Modell zumindest in Abhängigkeit der Vergleichsdaten und der Referenzeigenschaft an dem Referenzortspunkt definiert wird,
und in Verfahrensschritt E das Bestimmen der Eigenschaft der Halbleiterschichtstruktur an dem Messortspunkt erfolgt, indem die Messdaten in das zweite Modell eingegeben werden, und das zweite Modell die Schichteigenschaft an dem Messortspunkt ausgibt.

5. Verfahren nach Anspruch 4, bei dem
das zweite Modell ein analytisches Modell und/oder ein trainiertes Modell auf Basis einer künstlichen Intelligenz, insbesondere einem neuronalen Netz, umfasst.

6. Verfahren nach Anspruch 4, bei dem
die Referenzdaten und die Referenzeigenschaft an einer Mehrzahl zueinander benachbarter Referenzortspunkten bereitgestellt werden
und die Vergleichsdaten an den Referenzortspunkten ermittelt,
und das zweite Modell zumindest in Abhängigkeit der Vergleichsdaten und den Referenzeigenschaften definiert wird, derart, dass das zweite Modell in Verfahrensschritt E eine Nachbarschaftsbeziehung zwischen Eigenschaften der Halbleiterschichtstruktur an zwei benachbarten Messortspunkten berücksichtigt.

7. Verfahren zumindest nach Anspruch 6, bei dem
die Referenzortspunkte der Mehrzahl an Referenzintensitäten, in deren Abhängigkeit das zweite Modell definiert wird, entlang einer Linie oder flächig vorliegen.

8. Verfahren nach Anspruch 6 oder 7, bei dem
die in Verfahrensschritt E bestimmte Eigenschaft der Halbleiterschichtstruktur an dem Messortspunkt in das zweite Modell zurückgeführt wird und
Verfahrensschritt E an einem weiteren Messortspunkt wiederholt wird, wobei die Schichteigenschaft an dem weiteren Messortspunkt in Abhängigkeit einer Nachbarschaftsbeziehung zu der Schichteigenschaft an dem Messortspunkt von dem zweiten Modell ausgegeben wird.

9. Verfahren zumindest nach Anspruch 4, bei dem
die in Verfahrensschritt C bereitgestellten Referenzeigenschaften an den Referenzortspunkten synthetisch erzeugt sind und in ein erstes Modell eingegeben werden und das erste Modell in Verfahrensschritt B die Referenzdaten mit spektral hochaufgelösten Referenzintensitäten und in Verfahrensschritt D0 die Vergleichsdaten mit spektral niedrig aufgelösten Vergleichsintensitäten ausgibt.

10. Verfahren zumindest nach Anspruch 4, bei dem
die in Verfahrensschritt B bereitgestellten Referenzdaten mit spektral hochaufgelösten Referenzintensitäten und die in Verfahrensschritt D0 bereitgestellten Vergleichsdaten mit spektral niedrig aufgelösten Vergleichsintensitäten synthetisch erzeugt sind und in ein erstes Modell eingegeben werden und das erste Modell in Verfahrensschritt C die Referenzeigenschaften an den Referenzortspunkten ausgibt.

11. Verfahren nach Anspruch 9 oder 10, bei dem
das zweite Modell in Abhängigkeit der Referenzeigenschaften, der Referenzdaten und den Vergleichsdaten definiert wird
und in Verfahrensschritt E das Bestimmen der Eigenschaft der Halbleiterschichtstruktur an einer Vielzahl an Messortspunkten ortsaufgelöst erfolgt, indem die Messdaten in das zweite Modell eingegeben werden und das zweite Modell die Schichteigenschaft ortsaufgelöst für die Messortspunkte ausgibt.

12. Verfahren nach einem der voranstehenden Ansprüche, bei dem
die wellenlängenabhängigen Referenzintensitäten und/oder die gemessenen wellenlängenabhängigen Intensitäten durch Messung diskreter wellenlängenabhängiger Intensitätswerte ermittelt werden.

13. Verfahren nach Anspruch 12, bei dem
zumindest die wellenlängenabhängigen Messintensitäten bildgebend mittels einer Multispektralkamera und/oder einer Hyperspektralkamera erfasst werden.

14. Verfahren nach einem der voranstehenden Ansprüche, bei dem
die Schichtstruktur zumindest teilweise monokristallines Silizium umfasst und
die Halbleiterschichtstruktur zwei epitaktisch gewachsene Schichten umfasst, wobei eine erste Schicht eine höhere Porosität aufweist als eine zweite Schicht.
